# EUROPÄISCHE PATENTANMELDUNG

(11) **EP 2 962 834 A1**
(43) Veröffentlichungstag der Anmeldung: **06.01.2016**
(21) Anmeldenummer: 15174235.0
(22) Anmeldetag: 29.06.2015
(51) Int. Cl.: B29C 65/02, B29C 65/44

(54) **KUNSTSTOFF-METALL-HYBRIDTEIL UND FÜGEVERFAHREN**

(30) Priorität: 30.06.2014 DE 202014005241 U; 13.08.2014 DE 102014216049; 15.10.2014 DE 102014220911
(71) Anmelder: Joma-Polytec GmbH, 72411 Bodelshausen (DE)
(72) Erfinder: Pfitzer, Friedhelm, 72414 Rangendingen (DE); Diehl, Benjamin, 72116 Mössingen (DE); Keppler, Philipp, 72116 Mössingen (DE); Heinz, Stefan, 72411 Bodelshausen (DE)
(74) Vertreter: DREISS Patentanwälte PartG mbB

(57) **Zusammenfassung**

Kunststoff-Metall-Hybridteil umfassend wenigstens ein Metall-Bauteil und wenigstens ein Kunststoff-Bauteil, wobei das Metall-Bauteil einen Fügeabschnitt aufweist, der eine mittels eines Laser hergestellte strukturierte Oberfläche aufweist, und wobei das Kunststoff-Bauteil (18) einen Gegenabschnitt aufweist, der mit der strukturierten Oberfläche verzahnt ist, wobei die Verzahnung mittels thermischem Aufschmelzen des Gegenabschnitts hergestellt ist; sowie Verfahren hierfür.

## Beschreibung

Die Erfindung betrifft ein Kunststoff-Metall-Hybridteil umfassend wenigstens ein Metall-Bauteil und wenigstens ein Kunststoff-Bauteil, wobei das Metall-Bauteil einen Fügeabschnitt aufweist. Die Erfindung betrifft auch ein Verschließ- und/oder Fügeverfahren eines solchen Kunststoff-Metall-Hybridteils.

Derartige Bauteile sind in vielfältiger Art und Weise bekannt. Insbesondere können Kunststoff-Bauteile und Metall-Bauteile mittels Schraubverbindungen oder Klebeverbindungen miteinander gefügt sein.

Der vorliegenden Erfindung liegt die Aufgabe zu Grunde, ein Kunststoff-Metall-Hybridbauteil zur Verfügung zu stellen, das auf andere Art und Weise gefügt ist. Das Kunststoff-Metall-Hybridbauteil kann dabei insbesondere auf dem Gebiet der Kraftfahrzeugtechnik Verwendung finden.

Diese Aufgabe wird mit einem Kunststoff-Metall-Hybridteil gelöst, bei dem der Fügeabschnitt eine mittels eines Lasers hergestellte strukturierte Oberfläche aufweist, wobei das Kunststoff-Bauteil einen Gegenabschnitt aufweist, der mit der strukturierten Oberfläche verzahnt ist, wobei die Verzahnung mittels thermischem Aufschmelzen des Gegenabschnitts hergestellt wird.

Es hat sich herausgestellt, dass derartige Kunststoff-Metall-Hybridteile auf einfache Art und Weise hergestellt werden können, und dennoch vergleichsweise hohe Kräfte zwischen dem Metall-Bauteil und dem Kunststoff-Bauteil übertragen werden können. Die strukturierte Oberfläche weist dabei vorzugsweise eine räumliche Struktur auf, die insbesondere auch Hinterschneidungen aufweisen kann, die beim thermischen Aufschmelzen hintergriffen werden.

Ein Vorteil der Erfindung ist, dass derartige Kunststoff-Metall-Hybridteile als einzeln handhabbare Baugruppen bereitgestellt werden können. Bei bekannten Kunststoff-Metall-Hybridteilen findet ein Fügen insbesondere auch durch eine Schraubverbindung statt. Derartige Schraubverbindungen haben den Nachteil, dass sie sich lösen können beziehungsweise dass auch nur das Metall-Bauteil und/oder nur das Kunststoff-Bauteil letztlich in einer größeren Baugruppe Verwendung findet, ohne dass das Bauteil, was mit dem Metall-Bauteil oder Kunststoff-Bauteil gefügt werden soll, daran befestigt ist. Das Vorsehen eines Fügens mittels strukturierter Oberfläche und zugehöriger Verzahnung hat den Vorteil, dass das Hybridteil unlösbar miteinander verbunden als Metall-Bauteil und das Kunststoff-Bauteil vorsieht; ein Verbauen des Hybridteils in einer größeren Baugruppe ohne das Metall-Bauteil oder ohne das Kunststoff-Bauteil ist folglich nicht möglich. Die Verbindung zwischen Kunststoff-Bauteil und Metall-Bauteil ist dabei unlösbar.

Aufgrund der Gestaltungsfreiheit des insbesondere Kunststoff-Bauteils ist es möglich, dass das Hybridbauteil vorteilhafte Eigenschaften, wie Steifheit, geringes Gewicht etc. aufweist.

Als besonders vorteilhaft hat sich herausgestellt, ein Kunststoff-Metall-Hybridbauteil zur Verfügung zu stellen, welches als versteifendes Strukturteil ausgebildet ist. Das Strukturteil kann dabei als A-Säule eines Kraftfahrzeugs ausgebildet sein. Die A-Säule eines Kraftfahrzeugs ist die Säule im Kraftfahrzeug, die zwischen dem Fahrzeugdach und der vorderen Spritzwand vorgesehen ist, beziehungsweise welche die Windschutzscheibe seitlich begrenzt. Erfindungsgemäße Kunststoff-Metall-Hybridteile können allerdings auch bei den B-, C- und D-Säulen von Fahrzeugen Verwendung finden. Die Versteifung ist dabei insbesondere derart, dass die Übertragung von Körperschall reduziert und damit auch akustische Eigenschaften verbessert werden.

Dabei ist vorteilhaft, wenn das Metall-Bauteil als rinnenartig oder dreidimensional ausgebildetes Metallblech und das Kunststoff-Bauteil in und/oder an das Metall-Bauteil ein- und/oder angelegt ist. Dadurch kann eine vergleichsweise stabile Säule mit einem geringen Gewicht bereitgestellt werden.

Die Fügeabschnitte können dabei entlang den freien Längskanten des Metallblechs verlaufen; die Gegenabschnitte verlaufen dann entsprechend am Kunststoff-Bauteil. Das Kunststoff-Bauteil kann insgesamt auch rinnenartig oder dreidimensional ausgebildet sein.

Dabei kann ferner vorteilhaft vorgesehen sein, dass das Kunststoff-Bauteil Rippen aufweist, deren freien Enden Gegenabschnitte umfassen, die mit an dem Metall-Bauteil vorgesehenen Fügeabschnitten gefügt sind. Durch Vorsehen derartiger Rippen kann das Kunststoff-Metall-Hybridteil sehr biegesteif ausgebildet werden. Zudem kann ein Auffüllen oder Ausschäumen der Säule, wie es nach dem Stand der Technik erfolgt, entfallen.

Vorteilhafterweise sind die Rippen als Kreuzrippen ausgebildet. Die Rippen können dabei die Längsachse der Säule insbesondere unter einem Winkel von vorzugsweise 45° schneiden.

Gemäß einer anderen Ausbildung der Erfindung kann das Kunststoff-Metall-Hybridteil als Kettenführung einer sich bewegenden Kette, insbesondere als Kettenführung einer Steuerkette eines Verbrennungsmotors, ausgebildet sein.

Vorteilhafterweise ist das Metall-Bauteil als Trägerelement und das Kunststoff-Bauteil als Gleitelement ausgebildet. Das Gleitelement weist vorzugsweise eine Gleitfläche für die Kette auf, wobei die Gegenfläche auf der der Gleitfläche abgewandten Seite des Gleitelements vorgesehen ist. Das Trägerteil ist vorzugsweise als Druckgussteil, Feingussteil oder als Stanzbiegeteil ausgebildet und weist Befestigungsabschnitte zur definierten Anordnung der Kettenführung auf.

Das Kunststoff-Metall-Hybridteil kann auch als Motorträgerteil zur Halterung eines Motors an einer Motoraufnahme, insbesondere einer Motoraufnahme eines Kraftfahrzeugs, ausgebildet sein.

Das Kunststoff-Bauteil ist dabei als Trägerelement ausgebildet, das einen Befestigungsabschnitt zur Anordnung an der Motoraufnahme und einen weiteren Motorbefestigungsabschnitt zur An- oder Auflage eines Motors aufweist. Das Metall-Bauteil kann als an dem Trägerelement angeordnetes Hitzeschild und/oder als Versteifungsteil des Trägerelements ausgebildet sein. Das Hitzeschild bzw. das Versteifungsteil kann dabei insbesondere aus Blech geformt sein.

Das Hitzeschild bzw. das Versteifungsteil weist dabei eine das Trägerelement wenigstens abschnittsweise abdeckende Abdeckfläche mit Fügeabschnitten auf. Die Fügeabschnitte wirken dann mit am Trägerelement vorgesehenen Gegenabschnitten zusammen.

Ferner ist vorteilhaft, wenn das Trägerelement hin zum Hitzeschild bzw. das Versteifungsteil gewandte Rippen aufweist, wobei die freie Stirnseite der Rippen, oder Wandabschnitte der Rippen, Gegenabschnitte vorsehen, die mit den Fügeabschnitten gefügt sind.

Bei einer weiteren Ausbildungsform ist das Kunststoff-Metall-Hybridteil als Motorölwanne eines Motors ausgebildet.

Das Metall-Bauteil kann dabei als Ölwanne ausgebildet sein und das Kunststoff-Bauteil als Ölhobel und/oder als Stabilisierungsteil. Der Ölhobel und/oder das Stabilisierungsteil sind vorteilhafterweise innerhalb der Ölwanne vorgesehen. Der Ölhobel soll dabei das Aufschäumen von Öl verhindern. Das Stabilisierungsteil soll zur Stabilisierung der Wanne dienen.

Andererseits ist denkbar, dass das Kunststoff-Bauteil als Ölwanne ausgebildet ist und das Metall-Bauteil als Ölhobel und/oder Stabilisierungsteil ausgebildet ist.

Es kann vorgesehen sein, dass an der Innenseite der Ölwanne Dome oder zumindest Flächen vorgesehen sind, an deren freien Stirnseite Fügeabschnitte oder Gegenabschnitte vorgesehen sind. Die Füge- oder Gegenabschnitte werden dann mit Gegenabschnitten oder Fügeabschnitten, die am Ölhobel oder am Stabilisierungsteil vorgesehen sind, gefügt.

Ferner ist denkbar, dass das Metall-Bauteil als Ölwanne beziehungsweise Ölsaugrohr ausgebildet ist und dass das Kunststoffbauteil als Ölsaugrohr beziehungsweise Ölwanne ausgebildet ist. Auch hierdurch kann ein geeignetes Fügen der Bauteile erreicht werden.

Ferner ist denkbar, dass das Kunststoff-Metall-Hybridteil als Rahmenbauteil eines Fensters ausgebildet ist. Das Rahmenbauteil kann dabei ein eine Scheibe oder ein einen öffenbaren Flügel einfassendes Bauteil sein. Insbesondere bei Metallfenstern wie beispielsweise Aluminiumfenstern kann das Kunststoff-Bauteil als Isoliersteg zwischen zwei Metall-Bauteilen, die dann als Innenprofil und Außenprofil ausgebildet sind, Verwendung finden.

Beim bekannten Stand der Technik verbinden Kunststoffisolierstege durch eine form- oder kraftschlüssige Verbindung das Fensteraußenprofil mit dem Innenprofil. Diese Verbindung wird durch Einschieben der Isolierstege in formgeformte Bereiche des Metallprofiles ermöglicht oder der Kunststoffisolierstege wird durch Umbördeln oder Einrollen des Aluminiumprofils form oder kraftschlüssig verbunden. Teilweise werden auch die Kunststoffisolierstege in das Aluminiumprofil eingeklebt.

Aufgrund einer erfindungsgemäß vorgesehenen verzahnten Verbindung erfolgt eine Verminderung der auftretenden Längsschubkräfte auf den Isoliersteg, die durch unterschiedliche Längenausdehnungen aufgrund von Temperaturunterschieden zwischen Außentemperatur und Innentemperatur hervorgerufen werden. Damit ergibt sich eine höhere Festigkeit und eine längere Lebensdauer wegen geringer Spannungen.

Gemäß der Erfindung kann der Isoliersteg als Hohlprofil ausgebildet sein, der auf einander abgewandten Seiten Fügeabschnitte aufweist und/oder dass zwei einander gegenüberliegende Rahmenprofil mit einander zugewandten Gegenabschnitten vorgesehen sind.

Ferner ist denkbar, dass das Kunststoff-Metall-Hybridteil Steuergerät ausgebildet ist. Derartige Steuergeräte finden in Kraftfahrzeugen in vielfältiger Art und Weise Verwendung. Die Steuergeräte müssen die darin untergebrachte elektrische und/oder elektronische Schaltung insbesondere luft- und feuchtigkeitsdicht aufnehmen. Dabei ist bekannt, das Gehäuse vollständig aus einem Kunststoff herzustellen.

Aus dem Stand der Technik ist es bekannt, das Gehäuseteil mit dem Deckelteil beispielsweise zu verschrauben, zu verrasten, zu vernieten, zu verschweißen oder zu verkleben. Derartige Verbindungen sind vergleichsweise aufwendig, da das Deckelteil und/oder das Grundteil entsprechend ausgebildet sein müssen. Ferner ist zu berücksichtigen, dass an Steuergeräte in Kraftfahrzeugen vergleichsweise hohe Anforderungen gestellt werden, insbesondere auch was die Umwelteinflüsse betrifft.

Ein erfindungsgemäßes Kunststoff-Metall-Hybridteil in Form eines Steuergeräts zeichnet sich dadurch aus, dass das Grundteil bzw. Deckelteil als Kunststoff-Bauteile und Deckelteil bzw. Grundteil als Metall-Bauteil ausgebildet ist. Das Metall-Bauteil weist dabei einen Fügeabschnitt auf, der eine strukturierte Oberfläche vorsieht. Das Kunststoff-Bauteil weist einen Gegenabschnitt auf, der mit der strukturierten Oberfläche verzahnt ist, wobei die Verzahnung mittels thermischem Aufschmelzen des Gegenabschnitts hergestellt ist.

Die strukturierte Oberfläche weist dabei vorzugsweise eine räumliche Struktur auf, die insbesondere auch Hinterschneidungen aufweist, die beim thermischen Aufschmelzen hintergriffen werden. Klemm-, Rast- oder Schraubverbindungen sind weder am Deckelteil noch am Grundteil vorzusehen. Insofern können Deckelteil und Grundteil vergleichsweise einfach aufgebaut sein und damit in ihrer Herstellung kostengünstig sein. Zudem kann gewährleistet werden, dass eine solche Verbindung luft-, feuchtigkeitsdicht zudem unlösbar ist. Dadurch kann auch eine Manipulation der im Gehäuse vorgesehenen elektrischen Schaltkreise unterbunden werden.

Grundsätzlich stellt sich die Verwendung von beispielsweise dem Grundteil als Kunststoff-Bauteil und dem Deckelteil als Metall-Bauteil als problematisch heraus, insbesondere aufgrund den großen unterschiedlichen Wärmeausdehnungskoeffizienten. Deshalb ist es regelmäßig erforderlich, zwischen dem Kunststoff-Grundteil und einem Metall-Deckelteil eine zusätzliche Formdichtung vorzusehen. Die Erfindung hat dabei den Vorteil, dass keine weiteren Stoffe oder Formdichtungen zwischen dem Kunststoff-Bauteil und dem Metall-Bauteil vorgesehen werden müssen; durch die sich ergebende Verzahnung der beiden Bauteile kann eine dichte, dauerhafte und hohe Kräfte übertragende Verbindung bereitgestellt werden.

Das Ausbilden des Grundteils oder des Deckelteils als Metall-Bauteil hat zudem den Vorteil, dass Wärme, die im Steuergerät durch Bestromung der Schaltung auftritt, günstig über das Metall-Bauteil abgeleitet werden kann. Ferner ist vorteilhaft, dass das Metall-Bauteil magnetische Strahlung abschirmt und damit sich eine gute EMV (elektromagnetische Verträglichkeit) ergibt.

Das Grundteil ist vorteilhaftweise wannenartig mit einem umlaufenden Rand ausgebildet, der den Gegenabschnitt bzw. den Fügeabschnitt bildet. Das Deckelteil ist demgegenüber vorzugsweise plattenartig ausgebildet und weist einen umlaufenden Fügeabschnitt bzw. Gegenabschnitt auf. Insbesondere dann, wenn das Grundteil als Kunststoff-Bauteil ausgebildet ist, kann das Deckelteil als Metallplatte ausgebildet sein, die einen entsprechenden, umlaufenden Fügeabschnitt aufweist.

Vorteilhafterweise ist die Schaltung auf einer Leiterplatte angeordnet, wobei die Leiterplatte parallel zum Deckelteil verläuft. Insbesondere dann, wenn die Leiterplatte vergleichsweise nahe am Deckelteil, und wenn dieses Deckelteil als Metall-Bauteil ausgebildet ist, ergibt sich insgesamt eine hohe elektromagnetische Verträglichkeit. Zudem kann Wärme, die auf der Leiterplatte entsteht, über das Deckelteil günstig abgeleitet werden.

Ferner ist vorteilhaft, wenn das Metall-Bauteil einen Steckeranschluss für einen Potentialausgleich aufweist. Gerade dann, wenn das Deckelteil als plattenartiges Metall-Bauteil ausgebildet ist, kann der Steckeranschluss in der Plattenebene liegen. Der Steckeranschluss kann folglich mittels eines Kabels mit dem Null-Leiter bzw. mit Erde verbunden werden. Auch hierdurch ergibt sich eine günstige elektromagnetische Verträglichkeit.

Ferner ist denkbar, dass das Kunststoff-Metall-Hybridteil Verbrennungsmotor ausgebildet ist. Der Verbrennungsmotor hat ein Kurbelwellengehäuse umfassenden Motorblock, einen am Motorblock vorgesehenen Zylinderkopf, und wenigstens einen am Motorblock vorgesehenes Abdeckelement, wobei der der Motorblock aus einem metallischen Material hergestellt ist und das Metall-Bauteil bildet. Das Abdeckelement kann insbesondere als eine den Zylinderkopf abdeckenden Abdeckhaube, als eine am Motorblock vorgesehene Ölwanne, und/oder als ein eine Steuerkette oder einen Keilreimen abdeckender Steuerdeckel ausgebildet sein.

Derartige Abdeckelemente werden gemäß dem Stand der Technik in der Regel an dem Motorblock mittels Befestigungsschrauben angeschraubt. Zwischen dem Motorblock und dem jeweiligen Abdeckelement wird dazu eine den jeweiligen Anforderungen gerecht werdende Dichtung vorgesehen.

Ein erfindungsgemäßes Kunststoff-Metall-Hybridteil in Form eines Verbrennungsmotors zeichnet sich dadurch aus, dass das Abdeckelement aus Kunststoffmaterial hergestellt ist, dass der Motorblock einen Fügeabschnitt aufweist, der eine mittels eines Laser hergestellte strukturierte Oberfläche aufweist, wobei das Abdeckelement einen Gegenabschnitt aufweist, der mit der strukturierten Oberfläche verzahnt ist, wobei die Verzahnung mittels thermischem Aufschmelzen des Gegenabschnitts hergestellt ist.

Es hat sich herausgestellt, dass derartige Verbindungen auf einfache Art und Weise hergestellt werden können, und dennoch fluiddicht sind und zudem vergleichsweise hohe Kräfte zwischen dem Metall-Bauteil und dem Kunststoff-Bauteil übertragen werden können. Eine Dichtung zwischen dem Motorblock und dem Abdeckelement kann dazu entfallen. Die strukturierte Oberfläche weist dabei vorzugsweise eine räumliche Struktur auf, die insbesondere auch Hinterschneidungen aufweisen kann, die beim thermischen Aufschmelzen des Kunststoffs hintergriffen werden.

Das Vorsehen eines Fügens mittels strukturierter Oberfläche und zugehöriger Verzahnung hat den Vorteil, dass eine unlösbare und dauerhaft dichte Verbindung bereit gestellt werden kann.

Vorteilhafterweise ist das Abdeckelement als eine den Zylinderkopf abdeckende Abdeckhaube ausgebildet. Die Abdeckhaube kann dabei eine umlaufende Anlagefläche, die als Gegenabschnitt ausgebildet ist, aufweisen. Der Motorblock weist vorzugsweise an seiner Oberseite eine entsprechend ausgebildete Anlagefläche für die Abdeckhaube auf, die als Fügeabschnitt ausgebildet ist. Insgesamt kann eine optimale Verbindung der Abdeckhaube am Motorblock gewährleistet werden, wobei diese Verbindung auch hohen, innerhalb des Zylinderkopfs herrschenden Temperaturen und Drücken Stand halten kann.

Ferner ist vorteilhaft, wenn das Abdeckelement als Ölwanne ausgebildet ist, die eine den Zylinderkopf abgewandte Seite des Motorblocks wenigstens abschnittsweise abdeckt. Die Ölwanne kann sich auch über die gesamte Unterseite des Motorblocks erstrecken. Die Ölwanne weist vorzugsweise einen umlaufenden, am Motorblock anliegenden Gegenabschnitt auf, der mit einem am Motorblock vorgesehenen, mit dem Gegenabschnitt zusammenwirkenden Fügeabschnitt verzahnt ist. Auch hierdurch kann eine sichere Verbindung hergestellt werden, die hohe Temperaturen und auch hohe Drücke aushält.

Ferner ist denkbar, dass das Abdeckelement als ein eine Steuerkette oder einen Keilriemen abdeckender Steuerdeckel ausgebildet ist. Der Steuerdeckel dient dabei insbesondere den Motor von seiner Vorderseite her abzudecken. Der Steuerdeckel kann sich dabei nicht nur über den Motorblock, sondern auch abschnittsweise über die Ölwanne und/oder die Abdeckhaube erstrecken. Insbesondere dann, wenn verschiedene Bauteile aneinander angrenzen, die ein sogenanntes, dichtungstechnisch problematische "Dreiländereck" ausbilden, kann durch die Verzahnung der Bauteile mittels thermischem Aufschmelzen des Gegenabschnitts des Kunststoff-Bauteils eine dichte Verbindung bereitgestellt werden.

Das Abdeckelement als solches kann eine im Abdeckelement vorgesehene, insbesondere dicht verschließbare Revisionsöffnung aufweisen. Die Revisionsöffnung kann dazu dienen, um auf den vom Abdeckelement umschlossenen Bereich zugreifen zu können.

Vorteilhafterweise kann der Motorblock aus einer Aluminiumlegierung hergestellt sein; insbesondere auch bei einer solchen Legierung kann eine Verzahnung mittels thermischem Aufschmelzen funktionssicher bereitgestellt werden.

Erfindungsgemäß wird das Kunststoff-Metall-Hybridteil mit einem Verfahren zum dichten Verschließen des Steuergeräts verschlossen, wobei der Gegenabschnitt thermisch aufgeschmolzen wird und der Fügeabschnitt derart auf den Gegenabschnitt aufgepresst wird, dass nach Abkühlung der Fügeabschnitt mit dem Gegenabschnitt unlösbar verzahnt ist. Für das Verfahren werden keine besonderen Werkzeuge oder zusätzliche Fügemittel benötigt. Das Verfahren gewährleistet zudem, dass eine sichere, dauerhafte und dichte Verbindung bereitgestellt wird.

Gemäß dem Verfahren können zum thermischen Aufschmelzen des Gegenabschnitts Laser, heißes Gas und/oder eine Infrarotbestrahlung Verwendung finden.

Gemäß dem erfindungsgemäßen Verfahren ist auch denkbar, dass zunächst, oder nur, der Fügeabschnitt erwärmt wird und dass beim Aufpressen des Fügeabschnitt auf den Gegenabschnitt thermisch aufgeschmolzen wird. Das Erwärmen des Fügeabschnitts kann dabei mittels Laser, Induktion, heißem Gas oder auch mittels einer Flamme erfolgen.

Weitere Einzelheiten und Vorteile der Erfindung sind der nachfolgenden Beschreibung zu entnehmen, anhand derer verschiedene Ausführungsformen der Erfindung näher beschrieben und erläutert sind.

Es zeigen:
- Figur 1: einen Schnitt durch eine Fügeverbindung;
- Figur 2: eine erfindungsgemäße Fahrzeugsäule;
- Figur 3: einen Querschnitt durch die Säule gemäß Figur 2;
- Figur 4: das Kunststoff-Bauteil der Säule gemäß Figur 2;
- Figur 5: eine andere Ausführungsform einer Säule im Querschnitt;
- Figur 6: die Säule gemäß Figur 5 in perspektivischer Ansicht;
- Figur 7: eine Kettenführung gemäß der Erfindung;
- Figur 8: die Draufsicht auf das Trägerelement der Kettenführung gemäß Figur 7;
- Figur 9: die Kettenführung gemäß Figur 7 in Seitenansicht;
- Figur 10: die dem Trägerteil zugewandte Unterseite des Gleitelements der Kettenführung gemäß Figur 7;
- Figur 11: ein erfindungsgemäßes Motorträgerteil in perspektivischer Ansicht;
- Figur 12: das Hitzeschild des Trägerteils gemäß Figur 11;
- Figur 13: das Trägerelement des Trägerteils gemäß Figur 11;
- Figur 14: ein anderes erfindungsgemäßes Motorträgerteil;
- Figur 15: die Unteransicht des Hitzeschilds des Trägerteils gemäß Figur 14;
- Figur 16: das Trägerelement des Trägerteils gemäß Figur 14;
- Figur 17: eine perspektivische Ansicht auf eine erfindungsgemäße Motorölwanne mit Ölhobel;
- Figur 18: die Draufsicht auf die Ölwanne ohne Ölhobel;
- Figur 19: eine Draufsicht auf den Ölhobel;
- Figur 20: eine Draufsicht auf die Ölwanne mit Ölhobel;
- Figur 21: einen Längsschnitt durch die Ölwanne gemäß Figur 20 entlang der Linie XXI;
- Figur 22: eine Vergrößerung der Ansicht XXII in Figur 21;
- Figur 23: ein erfindungsgemäßes Rahmenbauteil eines Fensters im Querschnitt;
- Figur 24: eine zweites erfindungsgemäßes Rahmenbauteil eines Fensters im Querschnitt;
- Figur 25: ein erfindungsgemäßes Steuergerät mit einer aufgeschnittenen Ecke;
- Figur 26: den Ausschnitt II in Figur 1 in Vergrößerung; und
- Figur 27: den Ausschnitt III in Figur 2 in Vergrößerung;
- Figur 28: einen Schnitt durch eine Fügeverbindung nach Fig. 29 und
- Figur 29: eine schematische Darstellung eines erfindungsgemäßen Verbrennungsmotors.

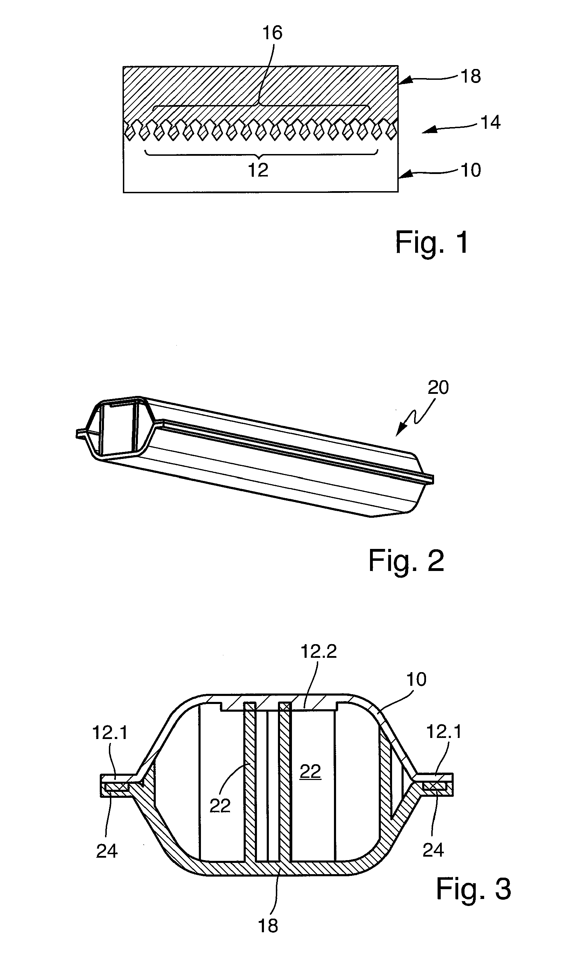

Figur 1 zeigt eine vergrößerte Ansicht eines Ausschnitts eines Metall-Bauteils 10 mit einem Fügeabschnitt 12, der eine strukturierte Oberfläche 14 aufweist. Die räumlich strukturierte Oberfläche ist dabei mittels Lasern in das Metall-Bauteil 10 eingebracht. Mit der strukturierten Oberfläche 14 ist ein Gegenabschnitt 16 eines Kunststoff-Bauteils 18 verzahnt. Die Verzahnung wird dabei durch Aufschmelzen des Gegenabschnitts 16 und Aneinanderpressen des Kunststoff-Bauteils 18 gegen das Metall-Bauteil 10 hergestellt. Hierdurch ergibt sich eine hochfeste Fügeverbindung zwischen dem Kunststoff-Bauteil 18 und dem Metall-Bauteil 10, wodurch insgesamt ein Kunststoff-Metall-Hybridbauteil bereitgestellt wird.

Je nach Anwendungsfall, Metall und/oder Kunststoff kann dabei die Art der räumlichen Strukturierung variieren; entscheidend ist, dass durch die Strukturierung der Oberfläche des Metall-Bauteils und anschließendem Aufschmelzen und Fügen des Gegenabschnitts des Kunststoff-Bauteils ein Kunststoff-Metall-Hybridteil bereitgestellt wird, das die an das Bauteil gestellten Erwartungen erfüllt.

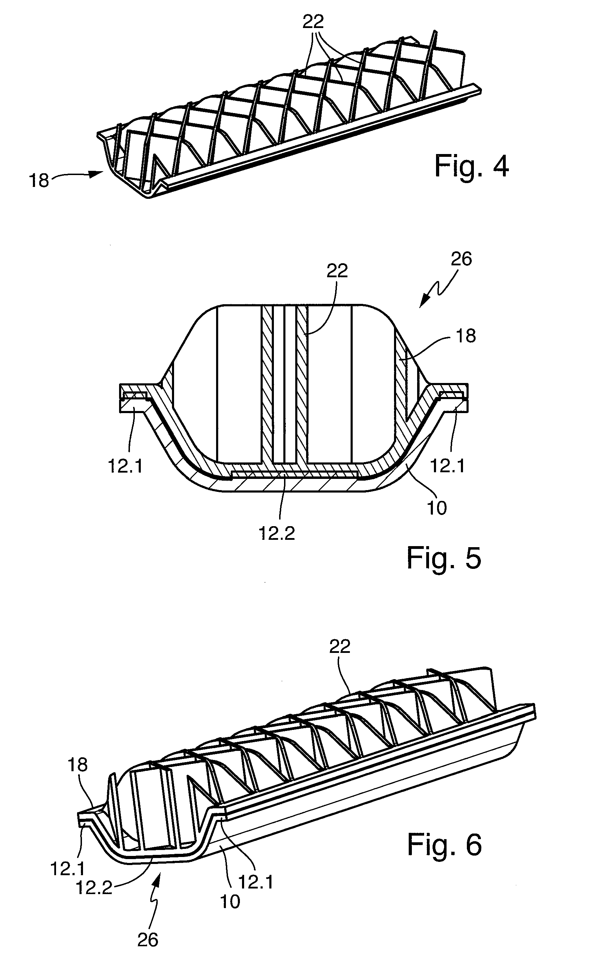

In der Figur 2 ist ein Kunststoff-Metall-Hybridteil in Form einer Fahrzeugsäule 20, insbesondere einer A-Säule dargestellt. Die Säule 20 umfasst dabei ein Metall-Bauteil 10 sowie ein am Metall-Bauteil 10 angeordnetes Kunststoff-Bauteil 18. Das Metall-Bauteil 10 ist dabei als rinnenartig oder dreidimensional ausgebildetes Metallblech realisiert, das über seine Längsrichtung vorzugsweise einen konstanten Querschnitt aufweist. Das Kunststoff-Bauteil 18 ist an seiner dem Metall-Bauteil 10 abgewandten Oberseite geschlossen ausgebildet. Hin zum Metallteil 10 weist das Kunststoff-Bauteil, wie aus Figur 4 deutlich wird, Kreuzrippen 22 auf. Die Kreuzrippen 22 schneiden dabei die Längsachse der Säule 20 unter einem Winkel von insbesondere 45°.

Das Metall-Bauteil 10 sieht verschiedene Fügeabschnitte 12 vor. Zum einen sind Fügeabschnitte 12.1 entlang der freien Längskanten 24 vorgesehen. Zum anderen sind Fügeabschnitte 12.2 im mittleren Bereich des Metall-Bauteils 10 vorgesehen. In diesen Fügebereichen 12.1 und 12.2 wird das Metall-Bauteil 10 mit einer strukturierten Oberfläche vorgesehen, so dass eine Verzahnung mit dem Kunststoff-Bauteil 18, wie es in Figur 1 dargestellt ist, erfolgen kann. Ein Aufschmelzen des Kunststoff-Bauteils 18 kann beispielsweise durch entsprechendes Erwärmen des Metall-Bauteils 10 erreicht werden, wobei nach dem Erwärmen die beiden Bauteile aneinander gedrückt werden. Nach Abkühlung kann so eine hochfeste Verbindung realisiert werden. Durch das Vorsehen der Kreuzrippen 22 kann eine sehr biegesteife Säule 20 zur Verfügung gestellt werden, die dennoch ein geringes Gewicht aufweist.

In den Figuren 5 und 6 ist eine zweite Ausführungsform einer Säule 26 gezeigt. Bei dieser Ausführungsform wird, anders als bei der Ausführungsform gemäß Figur 2 bis 4, die geschlossene Außenseite des Kunststoff-Bauteils 18 mit der geschlossenen Innenseite des Metall-Bauteils 10 gefügt. Das Metall-Bauteil 10 der Säule 26 kann dabei identisch zu dem Metall-Bauteil 10 der in Figur 2 bis 4 gezeigten Säule 20 sein. Entsprechend kann das Kunststoff-Bauteil 18 der Säule 26 dem Kunststoff-Bauteil 18 der Säule 20 entsprechen.

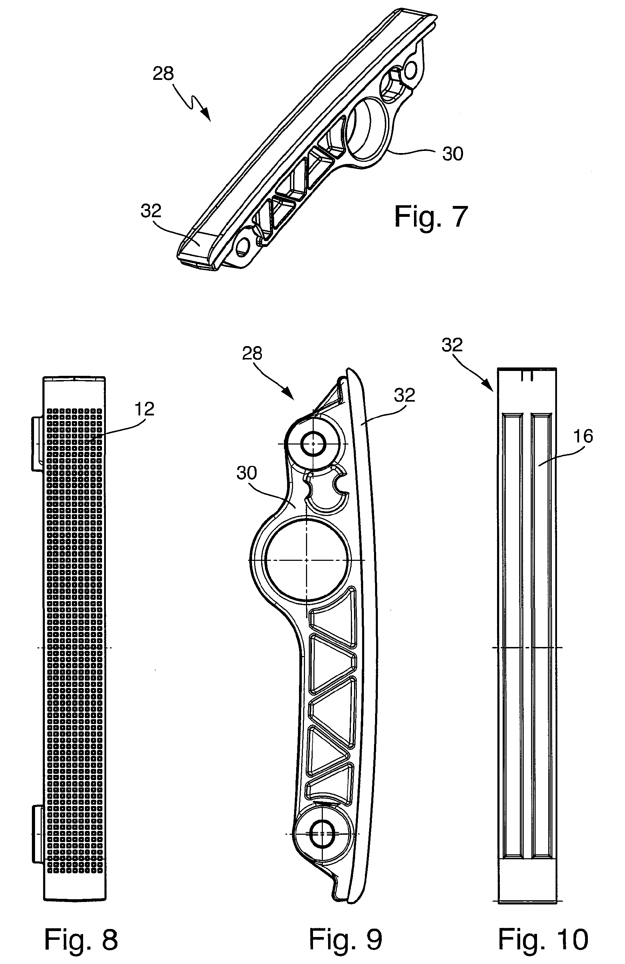

In den Figuren 7 bis 10 ist ein Kunststoff-Metall-Hybridbauteil gezeigt, das als Kettenführung 28 ausgebildet ist. Die Kettenführung 28 umfasst dabei ein Metall-Bauteil 10, das als Trägerelement 30 ausgebildet ist und ein Kunststoff-Bauteil 18, das als Gleitelement 32 ausgebildet ist. Die Kettenführung 28, beziehungsweise das Gleitelement 32, dient dabei zur Führung einer Kette, insbesondere einer Steuerkette eines Verbrennungsmotors. Das Trägerelement 30 kann beispielsweise als Metalldruckgussteil ausgebildet sein. Das Trägerelement 30 weist auf der dem Gleitelement 32 zugewandten Oberseite den Fügeabschnitt 12 mit der strukturierten Oberfläche auf. Die dem Trägerelement 30 zugewandte Unterseite des Gleitelements 32 sieht dazu den mit dem Fügeabschnitt 12 zu fügenden Gegenabschnitt 16 vor.

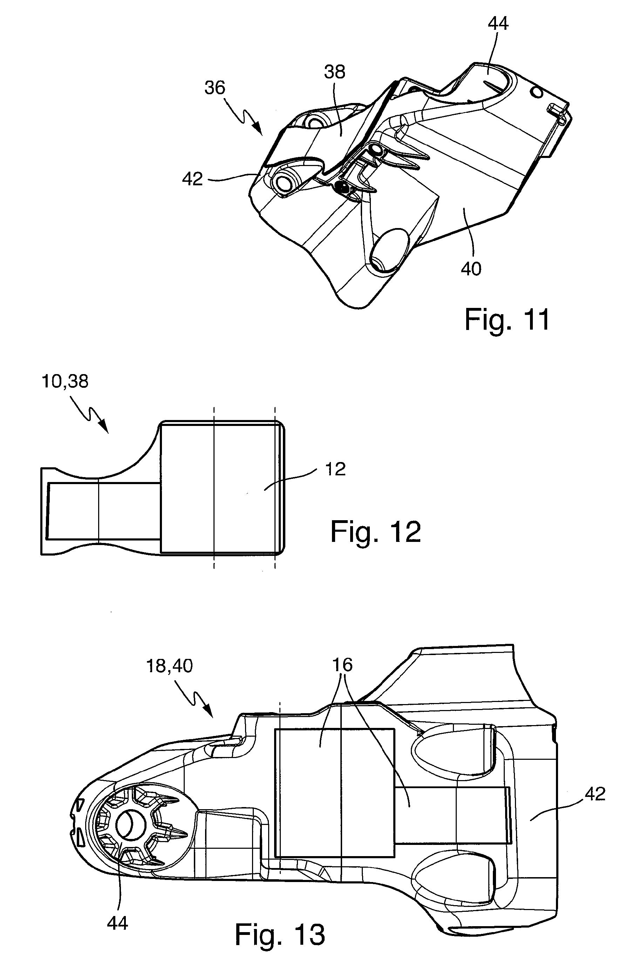

In der Figur 11 ist ein weiteres Hybridteil in Form eines Motorträgerteils 36 gezeigt, das ein in Figur 12 gezeigtes Metall-Bauteil 10 in Form eines Hitzeschilds 38 und ein Kunststoff-Bauteil 18 in Form eines Trägerelements 40 umfasst. Das Hitzeschild 38 kann zusätzlich oder alternativ auch als Versteifungselement ausgebildet sein. Das Trägerelement 40 sieht dabei einen Motorbefestigungsabschnitt 42 zur Befestigung des Trägerelements 40 an einem Motorblock vor. Das Trägerelement 40 sieht ferner einen Befestigungsabschnitt 44 zur Anordnung des Motorträgerteils 36 an einer Motoraufnahme vor. Zur Schwingungsdämpfung ist das Trägerelement 40 aus Kunststoff hegestellt. Als Hitzeschutz ist das Hitzeschild 38 am Trägerelement 40 angeordnet. Das Hitzeschild 38 sieht dazu Fügeabschnitte 12 vor, die eine strukturierte Oberfläche aufweisen, die mit am Trägerelement 40 vorgesehenen Gegenabschnitten 16 durch Anschmelzen gefügt werden.

Bei dem in den Figuren 11 bis 13 dargestellten Trägerelement 40 wird das Hitzeschild 38 flächig auf den Gegenabschnitt 16 aufgebracht.

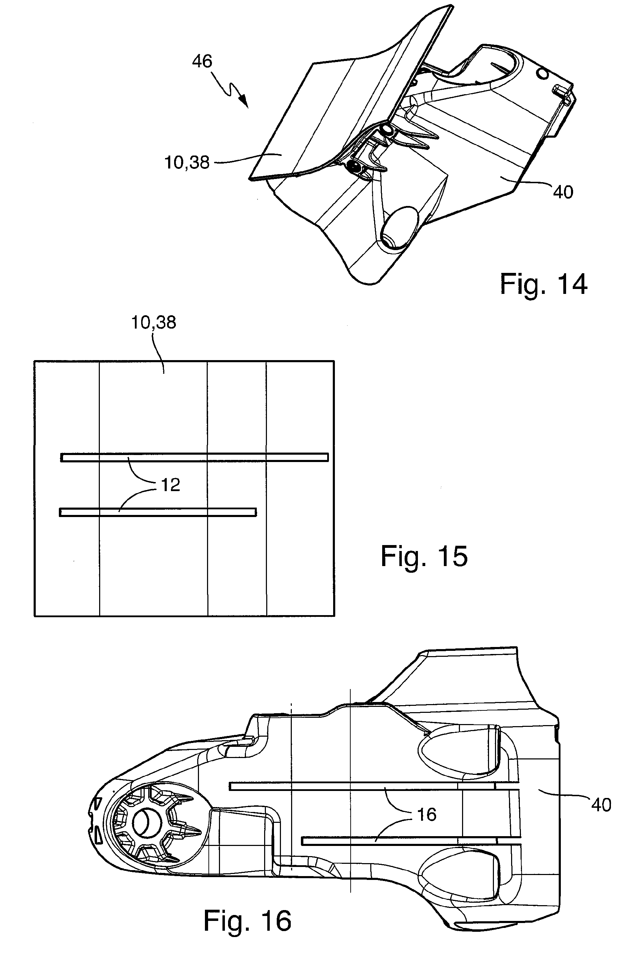

Bei dem in den Figuren 14 bis 16 dargestellten alternativen Motorträgerteil 46 sind auf der Unterseite des Hitzeschilds 38, wie aus Figur 15 deutlich wird, Fügeabschnitte 12 in Form von strukturierten Bereichen vorgesehen. Diese Fügeabschnitte 12 werden mit am Trägerelement 40 rippenartig ausgebildeten Gegenabschnitten 16 gefügt.

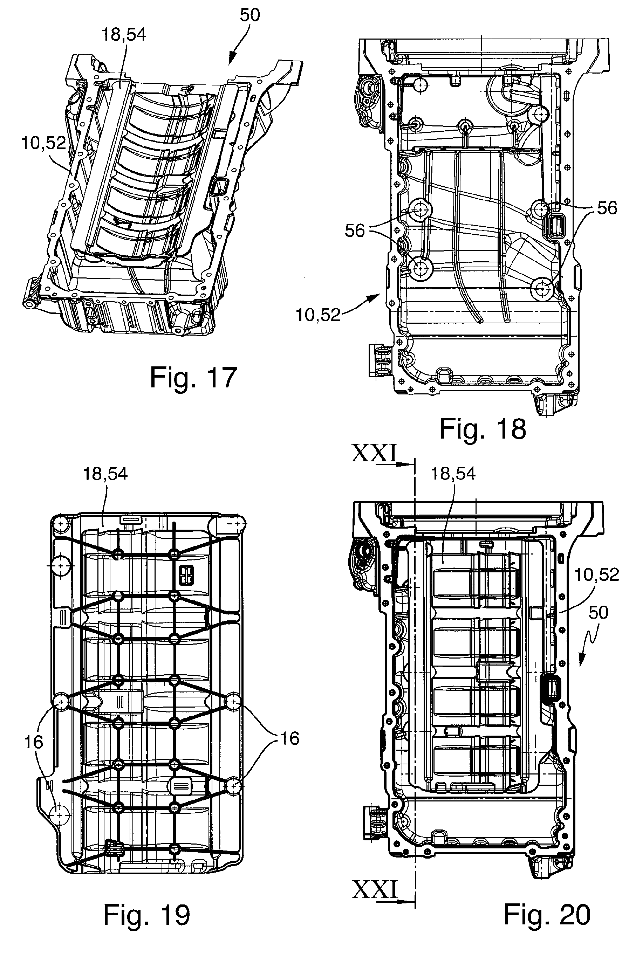

In den Figuren 17 bis 22 ist ein erfindungsgemäßes Kunststoff-Metall-Hybridteil in Form einer Motorölwanne 50 eines Verbrennungsmotors gezeigt. Die Ölwanne 50 umfasst dabei ein Metall-Bauteil 10 in Form einer Ölwanne 52 sowie ein Kunststoff-Bauteil 18 in Form eines Ölhobels 54. Der Ölhobel 54 kann zusätzlich oder alternativ auch als Versteifungselement ausgebildet sein.

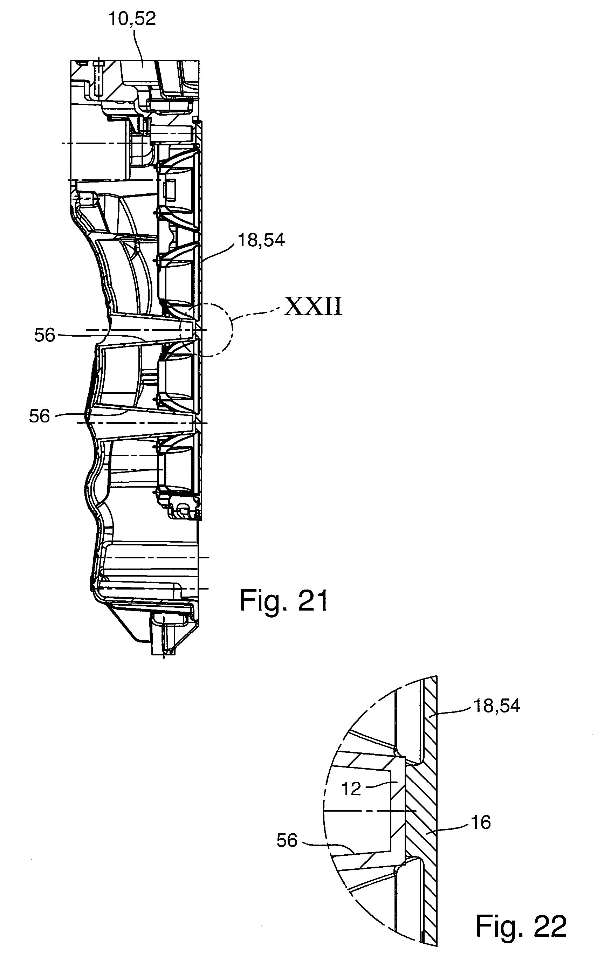

Auf der Innenseite der Ölwanne 52 sind Dome 56 vorgesehen, an deren freien Enden Fügeabschnitte 12 mit strukturierten Oberflächen ausgebildet sind. Ein derartiger Fügeabschnitt 12 ist in Figur 22 vergrößert dargestellt. An diesen Fügeabschnitten 12 kommen im gefügten Zustand die Ölhobelseitigen Gegenabschnitte 16 zur Anlage, wie insbesondere aus Figur 21 und der vergrößerten Ansicht aus Figur 22 deutlich wird.

Ein Fügen der Ölwanne 52 mit dem Ölhobel 54 kann durch entsprechendes Erwärmen der Ölwanne 52 und Aufpressen des Ölhobels 54 gegen die Fügeabschnitte 12 der Ölwanne 52 erfolgen.

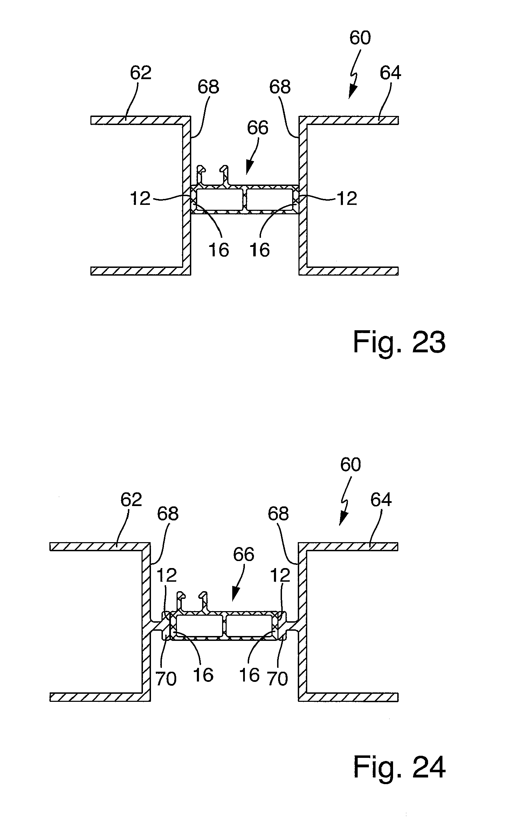

In den Figuren 23 und 24 sind zwei unterschiedliche Kunststoff-Metall-Hybridbauteile gezeigt, die als Rahmenbauteile 60 von Fenstern ausgebildet sind.

Die Rahmenbauteile 60 umfassen jeweils ein Innenprofil 62 und ein Außenprofil 64. Im verbauten Zustand des Fensters ist das Innenprofil 62 auf der der Gebäudeinnenseite zugewandten Seite und das Außenprofil auf der der Außenseite zugewandten Seite vorgesehen. Zur Vermeidung einer Wärmebrücke ist zwischen den beiden Profilen 62 und 64, die als Metall-Bauteile ausgebildet sind, ein Kunststoff-Bauteil in Form eines Isoliersteges 66 vorgesehen.

Bei der Ausführungsform gemäß Figur 23 weisen die beiden Profile 62, 64 einander zugewandte, eben ausgebildete Flächen 68 auf. Diese Flächen 68 beinhalten die Fügeabschnitte 12. Die einander abgewandten Stirnseiten des Isolierstegs 66 bilden dabei die Gegenabschnitte 16.

Bei der Ausführungsform gemäß 24 weisen die einander zugewandten Flächen 68 der Profile 62 und 64 vorspringende T-Abschnitte 70 auf, die einander zugewandte T-Balken vorsehen, an denen die Fügeabschnitte 12 vorgesehen sind. Diese Fügeabschnitte 12 sind, wie in Figur 23, mit den einander abgewandten Gegenabschnitten 16 des Isolierstegs 66 gefügt.

Wie aus den Figuren 23 und 24 deutlich wird, sind sowohl die Profile 62 und 64 als auch der Isoliersteg 66 als Hohlprofile ausgebildet.

Die in den Figuren gezeigten Kunststoff-Metall-Hybridteile 20, 28, 36, 46 und 50, 60 haben den Vorteil, dass zwischen den jeweiligen Metall-Bauteilen und Kunststoff-Bauteilen sichere und unlösbare Verbindungen bestehen. Die Bauteile sind dennoch vergleichsweise leicht ausgebildet und vergleichsweise formstabil.

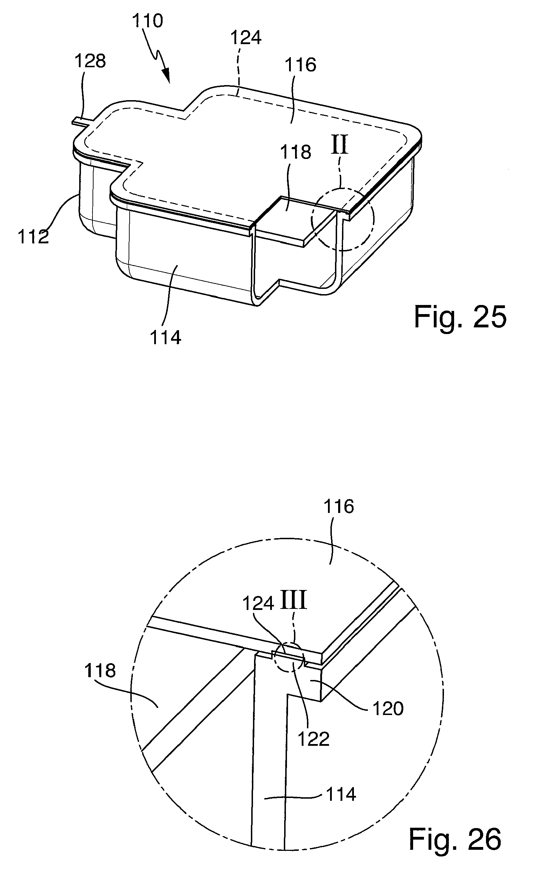

In Figur 25 zeigt ein Kunststoff-Metall-Hybridteile in Form eines Steuergeräts 110 mit einem Gehäuse 112, wobei das Gehäuse 112 ein wannenartig ausgebildetes Grundteil 114 und ein plattenartig ausgebildetes Deckelteil 116 umfasst. Im Gehäuse 112 ist eine Leiterplatte 118 untergebracht, auf der sich elektrische und/oder elektronische Schaltungen befinden.

Bei dem Steuergerät 110 handelt es sich beispielsweise um ein Steuergerät zur Ansteuerung eines Verbrennungsmotors.

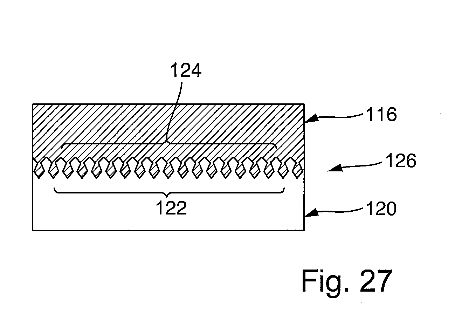

Wie aus den Figuren 26 und 27 deutlich wird, weist das wannenartig ausgebildete Grundteil 114 einen umlaufenden Rand 120 auf, an dessen Oberseite ein Gegenabschnitt 122 vorgesehen ist. Der Gegenabschnitt 122 ist, wie aus Figur 26 deutlich wird, stegartig ausgebildet und ist in Richtung des Deckelteils 116 erhaben.

Das Deckelteil 116, das aus einem metallischen Werkstoff ist, weist auf seiner dem Gegenabschnitt zugewandten Seite einen ebenfalls umlaufenden Fügeabschnitt 124 auf. In Figur 25 ist der Verlauf des Fügeabschnitts 124 durch eine gestrichelte Linie angedeutet.

Wie aus der Vergrößerung gemäß Figur 27 deutlich wird, weist der Fügeabschnitt 124 eine strukturierte Oberfläche 126 auf. Die räumlich strukturierte Oberfläche 126 ist dabei insbesondere mittels Lasern in das Deckelteil 116 eingebraucht. Mit der strukturierten Oberfläche 126 ist der Gegenabschnitt 122 räumlich verzahnt. Die Verzahnung wird dabei durch Aufschmelzen des Gegenabschnitts 122 und durch aneinanderpressen des Deckelteils 116 gegen das Grundteil 114 hergestellt. Die strukturierte Oberfläche 126 ist dabei vorzugsweise so ausgebildet, dass die Verzahnung zwischen Fügeabschnitt 124 und Gegenabschnitt 122 Hinterschneidungen aufweist, wodurch eine unlösbare Verbindung zwischen dem Deckelteil und dem Grundteil hergestellt wird. Insgesamt wird dadurch das Deckelteil 116 mit dem Grundteil 114 luft-und feuchtigkeitsdicht dauerhaft verbunden.

Wie aus Figur 25 deutlich wird, ist die Leiterplatte 118 im Grundteil 114 parallel zum Deckelteil 116 angeordnet, und zwar vergleichsweise nahe am Deckelteil 116. Dadurch, dass das Deckelteil 116 als Metall-Bauteil ausgebildet ist, schirmt es die Leiterplatte 118 weitestgehend ab und trägt damit zu einer guten elektromagnetischen Verträglichkeit des Steuergeräts 110 bei. Ferner kann über das metallische Bauteil durch Bestromung der Leiterplatte 118 entstehende Wärme aus dem Inneren des Gehäuses 112 über das Deckelteil 116 abgeführt werden.

Das Fügen des Deckelteils 116 mit dem Grundteil 114 kann zum einen dadurch erfolgen, dass der Gegenabschnitt 122 thermisch erwärmt wird und das nach dem Erwärmen des Gegenabschnitts 122 der Fügeabschnitt 124 an den Gegenabschnitt 122 angepresst wird. Das thermische Aufschmelzen des Gegenabschnitts 122 kann insbesondere mittels Laser, heißem Gas und/oder Infrarotbestrahlung erfolgen.

Alternativ oder zusätzlich ist denkbar, dass das Deckelteil 116, und/oder dessen Fügeabschnitt 124 erwärmt wird und dass beim Aneinanderpressen des Deckelteils 116 an das Grundteil 114 aufgrund des erwärmten Fügeabschnitts 124 der Gegenabschnitt 122 aufgeschmolzen wird. Ein Erwärmen des Fügeabschnitts 124 kann beispielsweise mittels Laser, Induktion, heißem Gas und/oder mittels einer Flamme erfolgen.

Wie aus Figur 25 zudem deutlich wird, weist das Deckelteil 116 ein sich in Richtung der Ebene des Deckelteils 116 erstreckenden Steckeranschluss 128 auf. An diesen Steckeranschluss 128 kann ein Potentialausgleich angeschlossen werden. Auch dies trägt zu einer guten elektromagnetischen Verträglichkeit bei.

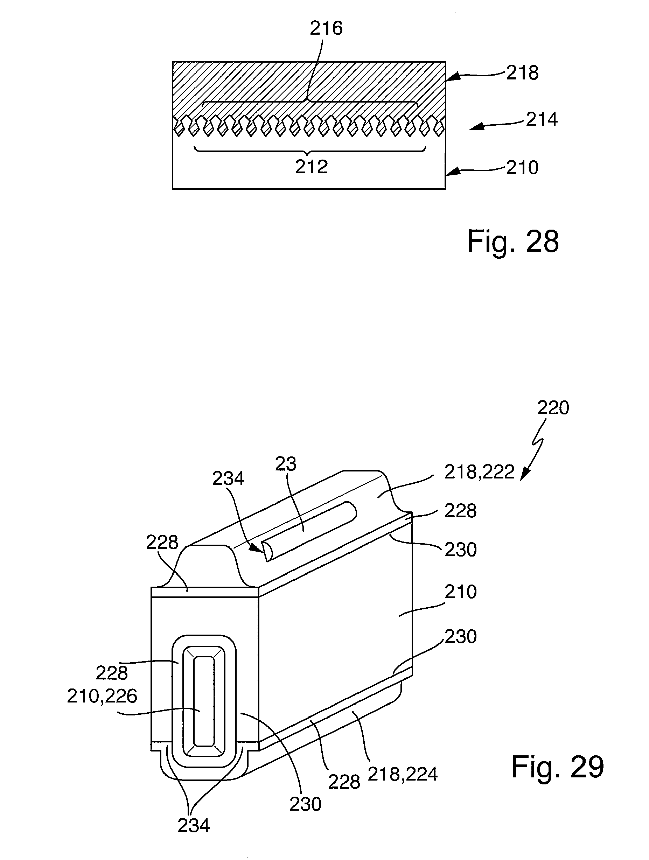

Figur 28 zeigt eine vergrößerte Ansicht eines Ausschnitts eines metallischen Motorblocks 210 mit einem Fügeabschnitt 212, der eine strukturierte Oberfläche 214 aufweist. Die räumlich strukturierte Oberfläche 214 ist dabei mittels Lasern eingebracht. Mit der strukturierten Oberfläche 214 ist ein Gegenabschnitt 216 eines aus Kunststoff hergestellten Abdeckelements 218 verzahnt. Die Verzahnung wird dabei durch Aufschmelzen des Gegenabschnitts 216 und Aneinanderpressen des Abdeckelements 218 gegen den Motorblock 210 hergestellt. Hierdurch ergibt sich eine hochfeste und fluiddichte Fügeverbindung zwischen dem Abdeckelement 218 und dem Motorblock 210.

Der in der Figur 29 schematisch dargestellte Verbrennungsmotor 220 umfasst den Motorblock 210, der Zylinder und ein Kurbelwellengehäuse umfasst. Am Motorblock 210 sind verschiedene Abdeckelemente 218 vorgesehen. Auf der Oberseite des Motorblocks 210 ist ein erstes Abdeckelement 218 in Form einer Abdeckhaube 222 angeordnet, die einen am Motorblock 210 angeordneten Zylinderkopf abdeckt. An der Unterseite des Motorblocks 210 ist ein Abdeckelement 218 in Form einer die Unterseite des Motorblocks 210 vollständig abdeckenden Ölwanne 224 vorgesehen. An der vorderen Stirnseite des Motorblocks 210 ist ein eine Steuerkette oder einen Keilriemen abdeckender Steuerdeckel 226 vorhanden.

Die Abdeckhaube 222, die Ölwanne 224 und der Steuerdeckel 226 können dabei einen im montierten Zustand an dem Motorblock 210 zur Anlage kommenden Gegenabschnitt 228 aufweisen. Die jeweiligen Gegenabschnitte 228 sind dabei vorzugsweise umlaufend und flächig am Motorblock 210 anliegend ausgebildet. Zum Fügen der Abdeckhaube 222, der Ölwanne 224 und/oder des Steuerdeckels 226 am Motorblock 210 kann vorgesehen sein, dass der Motorblock 210 einen jeweiligen Fügeabschnitt 230 vorsieht, der eine strukturierte Oberfläche 214 vorsieht, wie sie in Figur 228 gezeigt und in der dazugehörigen Beschreibung beschrieben ist.

Es sei ausdrücklich erwähnt, dass nicht alle drei Abdeckelement 222, 224 und 226 mittels strukturierter Oberfläche am Motorblock 210 gefügt sein müssen; erfindungsgemäß ist ausreichend, wenn lediglich eines der Abdeckelemente 222, 224, 226 derart am Motorblock 210 unlösbar befestigt ist.

Wie aus Figur 29 deutlich wird, weist die Abdeckhaube 222 eine mittels eines Verschlusselements 232 verschlossene Revisionsöffnung 234 auf. Dadurch wird der Zylinderkopf zugänglich.

Wie ebenfalls aus Figur 29 deutlich wird, kann sich der Steuerdeckel 226 über den Motorblock 210 und auch abschnittsweise über die Ölwanne 224 abschnittsweise erstrecken. Aufgrund des Vorsehens des Fügens mittels strukturierter Oberfläche und der daraus resultierten Verzahnung des jeweiligen Gegenabschnitts 216, 228 mit dem Fügeabschnitt 212, 230 kann insbesondere auch im Bereich 234 (sogenanntes "Dreiländereck"), an dem der Motorblock 210, die Ölwanne 224 und der Steuerdeckel 226 aneinander angrenzen eine gute Dichtung bereitgestellt werden.

## Patentansprüche

1. Kunststoff-Metall-Hybridteil (20, 28, 36, 46, 50, 60, 110, 220) umfassend wenigstens ein Metall-Bauteil (10, 114/116, 210) und wenigstens ein Kunststoff-Bauteil (18, 116/114, 218, 224), wobei das Metall-Bauteil (10, 114/116, 210) einen Fügeabschnitt (12, 124, 212, 230) aufweist, der eine mittels eines Laser hergestellte strukturierte Oberfläche (14, 126, 214) aufweist, und wobei das Kunststoff-Bauteil (18, 116/114, 218, 224) einen Gegenabschnitt (16, 122, 228) aufweist, der mit der strukturierten Oberfläche verzahnt ist, wobei die Verzahnung mittels thermischem Aufschmelzen des Gegenabschnitts (16, 122, 228) hergestellt ist.

2. Kunststoff-Metall-Hybridteil (20) nach Anspruch 1, **dadurch gekennzeichnet, dass** das Kunststoff-Metall-Hybridteil als Strukturbauteil und insbesondere als Fahrzeugsäule, und weiter insbesondere als A-Säule eines Kraftfahrzeugs, ausgebildet ist.

3. Kunststoff-Metall-Hybridteil (20) nach Anspruch 2, **dadurch gekennzeichnet, dass** das Metall-Bauteil (10) als rinnenartig oder dreidimensional ausgebildetes Metallblech und das Kunststoff-Bauteil (18) in und/oder an das Metall-Bauteil ein- und/oder angelegt ist.

4. Kunststoff-Metall-Hybridteil (20) nach Anspruch 2 oder 3, **dadurch gekennzeichnet, dass** das Kunststoff-Bauteil (18) Rippen (22) aufweist, deren freien Enden Gegenabschnitte umfassen, die mit an dem Metall-Bauteil (10) vorgesehenen Fügeabschnitten gefügt sind.

5. Kunststoff-Metall-Hybridteil (28) nach Anspruch 1, **dadurch gekennzeichnet, dass** das Kunststoff-Metall-Hybridteil als Kettenführung (28) einer sich bewegenden Kette, insbesondere als Kettenführung (28) einer Steuerkette eines Verbrennungsmotors, ausgebildet ist.

6. Kunststoff-Metall-Hybridteil (28) nach Anspruch 5, **dadurch gekennzeichnet, dass** das Metall-Bauteil (10) als Trägerelement (30) und das Kunststoff-Bauteil (18) als Gleitelement (32) ausgebildet ist, wobei das Gleitelement (32) eine Gleitfläche für die Kette aufweist und wobei die Gegenfläche (16) auf der der Gleitfläche abgewandten Seite des Gleitelements (32) vorgesehen ist.

7. Kunststoff-Metall-Hybridteil (36, 46) nach Anspruch 1, **dadurch gekennzeichnet, dass** das Kunststoff-Metall-Hybridteil als Motorträgerteil (36) zur Halterung eines Motors an einer Motoraufnahme ausgebildet ist.

8. Kunststoff-Metall-Hybridteil (36, 46) nach Anspruch 7, **dadurch gekennzeichnet, dass** das Kunststoff-Bauteil (18) als Trägerelement (40) ausgebildet ist, das einen Befestigungsabschnitt (44) zur Anordnung an der Motoraufnahme und einen Motorbefestigungsabschnitt (42) für einen Motor aufweist, und dass das Metall-Bauteil (10) als an dem Trägerelement angeordnetes Hitzeschild bzw. das Versteifungsteil (38) ausgebildet ist.

9. Kunststoff-Metall-Hybridteil (36, 46) nach Anspruch 8, **dadurch gekennzeichnet, dass** das Hitzeschild bzw. das Versteifungsteil (38) eine das Trägerelement (40) abdeckende Abdeckfläche mit Fügeabschnitten (12) aufweist.

10. Kunststoff-Metall-Hybridteil (36, 46) nach Anspruch 8 oder 9, **dadurch gekennzeichnet, dass** das Trägerelement (40) hin zum Hitzeschild bzw. das Versteifungsteil gewandte Rippen mit Gegenabschnitten (16) aufweist.

11. Kunststoff-Metall-Hybridteil (50) nach Anspruch 1, **dadurch gekennzeichnet,**
**dass** das Kunststoff-Metall-Hybridteil als Motorölwanne (50) eines Motors ausgebildet ist,
wobei das Metall-Bauteil als Ölwanne (52) und das Kunststoffbauteil als Ölhobel (54) und/oder Stabilisierungsteil ausgebildete sind, oder das Kunststoff-Bauteil als Ölwanne (52) und das Metall-Bauteil als Ölhobel (54) und/oder Stabilisierungsteil ausgebildete sind,
wobei insbesondere an der Innenseite der Ölwanne (52) Dome (56) oder sonstige in Fügerichtung zugängliche Flächen vorgesehen sind, an deren freien Stirnseite Fügeabschnitte (12) oder Gegenabschnitte (16) vorgesehen sind..

12. Kunststoff-Metall-Hybridteil (50) nach Anspruch 11, **dadurch gekennzeichnet, dass** das Metall-Bauteil als Ölwanne (52) beziehungsweise Ölansaugrohr ausgebildet ist und dass das Kunststoffbauteil als Ölansaugrohr beziehungsweise Ölwanne (52) ausgebildete ist.

13. Kunststoff-Metall-Hybridteil (60) nach Anspruch 1, **dadurch gekennzeichnet, dass** das Kunststoff-Metall-Hybridteil als Rahmenbauteil (60) eines Fensters ausgebildet ist, wobei insbesondere das Metall-Bauteil als Rahmenprofil (62, 64) ausgebildet ist und dass das Kunststoffbauteil als Isoliersteg (66) ausgebildete ist.

14. Kunststoff-Metall-Hybridteil (60) nach Anspruch 13, **dadurch gekennzeichnet, dass** der Isoliersteg (66) als Hohlprofil ausgebildet ist, der auf einander abgewandten Seiten Fügeabschnitte (12) aufweist und/oder dass zwei einander gegenüberliegende Rahmenprofil (62, 64) mit einander zugewandten Gegenabschnitten (16) vorgesehen sind.

15. Kunststoff-Metall-Hybridteil (110) nach Anspruch 1, **dadurch gekennzeichnet, dass** das Kunststoff-Metall-Hybridteil als Steuergerät (110), insbesondere zur Verwendung im einem Kraftfahrzeug, ausgebildet ist, mit einem Gehäuse (112) und mit wenigstens einer im Gehäuse untergebrachten elektrischen und/oder elektronischen Schaltung, wobei das Gehäuse (112) ein Grundteil (114) und ein Deckelteil (116) umfasst, wobei das Grundteil (114) bzw. Deckelteil (116) als Kunststoff-Bauteil und das Deckelteil (116) bzw. Grundteil (114) als Metall-Bauteil ausgebildet ist.

16. Kunststoff-Metall-Hybridteil (110) nach Anspruch 15, **dadurch gekennzeichnet, dass** das Grundteil (114) wannenartig mit einem umlaufenden Rand (122) ausgebildet ist, der den Gegenabschnitt (122) bzw. den Fügeabschnitt (124) aufweist, und dass das Deckelteil (116) plattenartig ausgebildet ist und einen umlaufenden Fügeabschnitt (124) bzw. Gegenabschnitt (122) aufweist.

17. Kunststoff-Metall-Hybridteil (220) nach Anspruch 1, **dadurch gekennzeichnet, dass** das Kunststoff-Metall-Hybridteil als Verbrennungsmotor (220) mit einem ein Kurbelwellengehäuse umfassenden Motorblock (210), mit einem am Motorblock (210) vorgesehenen Zylinderkopf, und mit wenigstens einem am Motorblock vorgesehenen Abdeckelement (218), ausgebildet ist, wobei der Motorblock (210) aus einem metallischen Material hergestellt ist und das Kunststoff-Bauteil bildet, wobei das Abdeckelement (218) aus Kunststoffmaterial hergestellt ist und das Kunststoffbauteil bildet den Gegenabschnitt (216, 228) aufweist, wobei der Motorblock den Fügeabschnitt (212, 230) mit der strukturierten Oberfläche (214) aufweist.

18. Kunststoff-Metall-Hybridteil (220) nach Anspruch 17, **dadurch gekennzeichnet, dass** Abdeckelement (218) als eine den Zylinderkopf abdeckenden Abdeckhaube (222) ausgebildet ist.

19. Kunststoff-Metall-Hybridteil (220) nach Anspruch 17 oder 18, **dadurch gekennzeichnet, dass** das Abdeckelement (218) als eine die dem Zylinderkopf abgewandte Seite des Motorblocks (210) wenigstens abschnittsweise abdeckende Ölwanne (224) ausgebildet ist.

20. Verfahren zum dichten Verschließen und/oder Fügen eines Kunststoff-Metall-Hybridteils (20, 28, 36, 46, 50, 60, 110, 220) nach einem der vorhergehenden Ansprüche, **dadurch gekennzeichnet,**
- **dass** der Gegenabschnitt (16, 122, 228) thermisch aufgeschmolzen wird und der Fügeabschnitt (12, 124, 212, 230) derart auf den Gegenabschnitt (16, 122, 228) aufgepresst wird, dass nach Abkühlung der Fügeabschnitt (12, 124, 212, 230) mit dem Gegenabschnitt (16, 122, 228) unlösbar verzahnt ist; oder
- **dass** zunächst der Fügeabschnitt (12, 124, 212, 230) erwärmt wird und dass beim Aufpressen des Fügeabschnitts (12, 124, 212, 230) auf den Gegenabschnitt (16, 122, 228) der Gegenabschnitt (16, 122, 228) thermisch aufgeschmolzen wird.
